# EUROPEAN PATENT SPECIFICATION

(11) **EP 2 081 801 B1**
(45) Date of publication and mention of the grant of the patent: **10.02.2010**
(21) Application number: 06842336.7
(22) Date of filing: 11.10.2006
(51) Int. Cl.: B60R 25/00, G07C 9/00

(54) **TRUCK PROVIDED WITH A PASSIVE KEYLESS ACCESS SYSTEM**
MIT EINEM PASSIVEN, SCHLÜSSELLOSEN ZUGANGSSYSTEM VERSEHENER LASTWAGEN
CAMION DOTÉ D'UN SYSTÈME D'ACCÈS PASSIF SANS CLÉ

(43) Date of publication of application: 29.07.2009
(73) Proprietor: RENAULT TRUCKS, 69800 St Priest (FR)
(72) Inventor: VINCENT, Loïc, F-69200 Venissieux (FR)
(74) Representative: Putet, Gilles
(86) International application number: PCT/IB2006/003900
(87) International publication number: WO 2008/044092

(56) References cited:
- EP-A- 1 132 999
- WO-A-03/097971
- JP-A- 9 125 767

## Description

### TECHNICAL FIELD OF THE INVENTION

This invention concerns a truck provided with a passive keyless access system.

### BACKGROUND OF THE INVENTION

Keyless systems have been known to allow an easy access to a personal vehicle because the user does not have to open a door with a key in so far as a customer identification device or CID, which is often in the form of a remote controller or an electronic card or tag, is recognised by the system when the user comes close to a door of the vehicle.

An active keyless access system is a system where a user actuates his remote controller, e.g. by pressing a button, to unlock a door of the vehicle. A passive keyless access system is a system where the user has a customer identification device which can exchange information with an onboard control unit without being manually actuated by the user. This invention applies to a passive keyless access system.

Such a system uses an antenna which is usually installed in the vicinity of a handle of the corresponding door, as mentioned in WO-A-03/097971. In such a device, the antenna is used to send a signal aiming at obtaining a corresponding response signal from the user's CID, so that this CID can be identified as authorising access to the vehicle.

If such a system were used with a truck, the antenna would be located close to the door handle, that is largely above the wheels of the truck so that one would not be sure that a CID located in a pocket of the user or in a bag lying on the floor close to the user would be reached by a signal sent by the antenna. On the other hand, the range of the signal sent by the antenna must not be very large in order to avoid unwished CID activation and detection, which could occur when the driver stands in front of the truck and cannot see the doors of the cabin anymore.

Therefore, up to now, passive keyless access systems have not been used for trucks.

### SUMMARY OF THE INVENTION

The invention aims at providing a truck with a keyless access system which is efficient to detect a customer identification device of a user, even if this device is in pocket or a bag of the user, whereas this system is safe in so far as it avoids unwished activation and detection of a CID.

To this purpose, the invention concerns a truck provided with a cabin, characterized in that it includes a passive keyless access system comprising an antenna located on a side of said truck, below the floor of said cabin, said antenna being adapted to send a challenge signal to a customer identification device.

Thanks to the invention, the location of the antenna below the floor of the cabin allows this antenna to send its challenge signal and to receive a response signal coming from a CID located in a volume which includes the vast majority of the possible positions of a CID held by hand by a user, lying in his/her pocket or lying in a bag or another piece of luggage.

According to further aspects of the invention, the truck might incorporate one or several of the following features:
- The antenna is located between the cabin floor and a wheel of the truck.
- The antenna is installed within a locker located between the cabin floor and the wheel
- Alternatively, the antenna can be installed within a wheel arch of the truck, above the wheel
- The antenna is located, with respect to a longitudinal direction of the truck, substantially at the same level as a handle of the door. In particular, the antenna can be located in a zone which extends between 300 mm toward the front side and 300 mm towards the back side of the truck, with respect to a central vertical axis of the handle.
- The antenna is located between 1300 and 1600 mm above the ground surface supporting the set of wheels.
- The keyless access system comprises a control unit installed within or on the cabin and adapted to actuate the antenna in order to send the challenge signal, this unit being adapted to receive the response signal from a customer identification device and to verify, on the basis of the response signal, if this customer identification device is valid for access to the truck, this unit being associated with means adapted to mechanically unlock the door of the cabin, upon instructions received from the unit.
- The antenna is a low frequency radio antenna.

### BRIEF DESCRIPTION OF THE DRAWINGS

The invention will be better understood on the basis of the following description which is given in correspondence with the annexed figures and as an illustrative example, without restricting the object of the invention. In the annexed figures:
- figure 1 is a partial side-view of a truck according to the invention.
- figure 2 is a top view of the truck of figure 1, the roof of the cabin being taken away.
- figure 3 is a partial cross section, at a slightly larger scale, along line III-III in figure 1 and
- figure 4 is a cross section similar to figure 3, for a truck according to a second embodiment of the invention.

### DETAILED DESCRIPTION OF SOME EMBODIMENTS

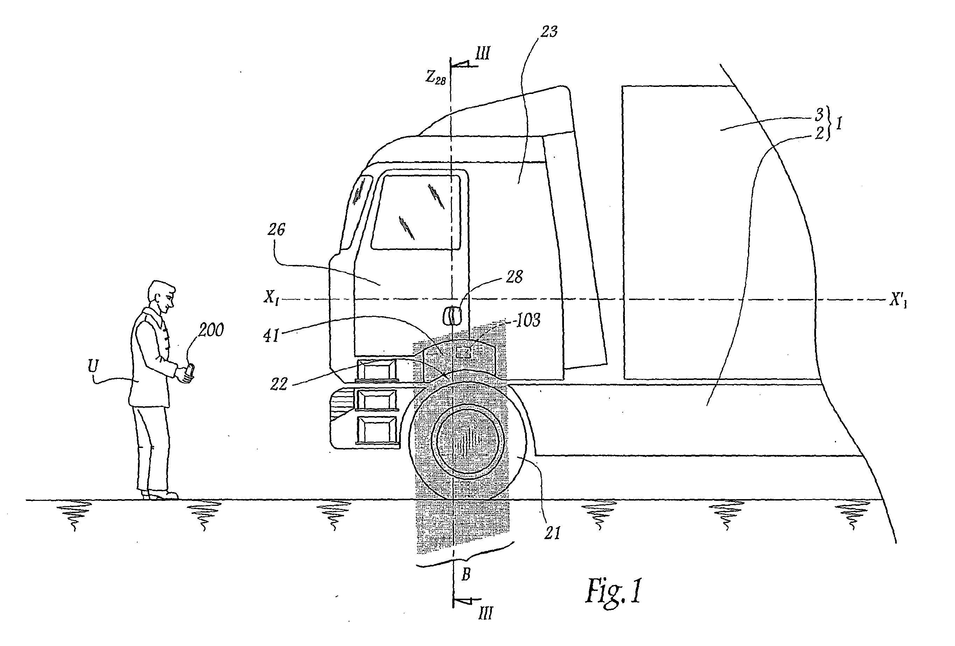

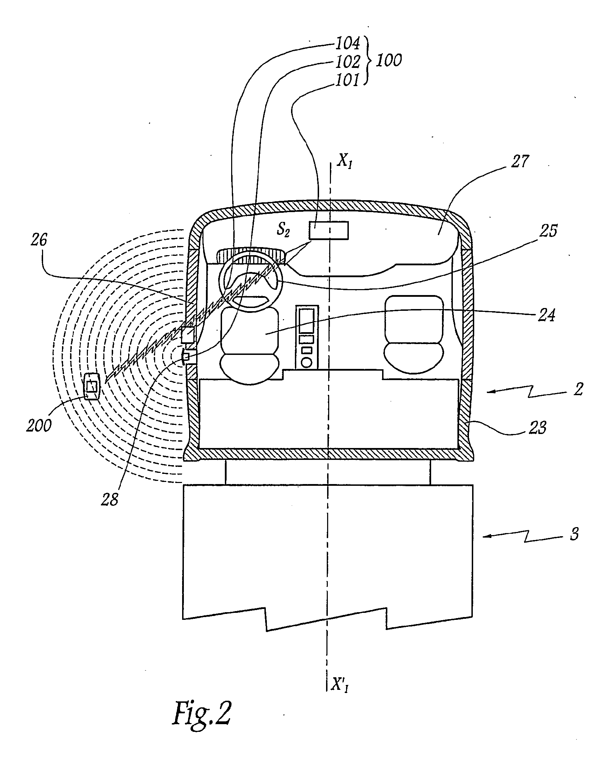

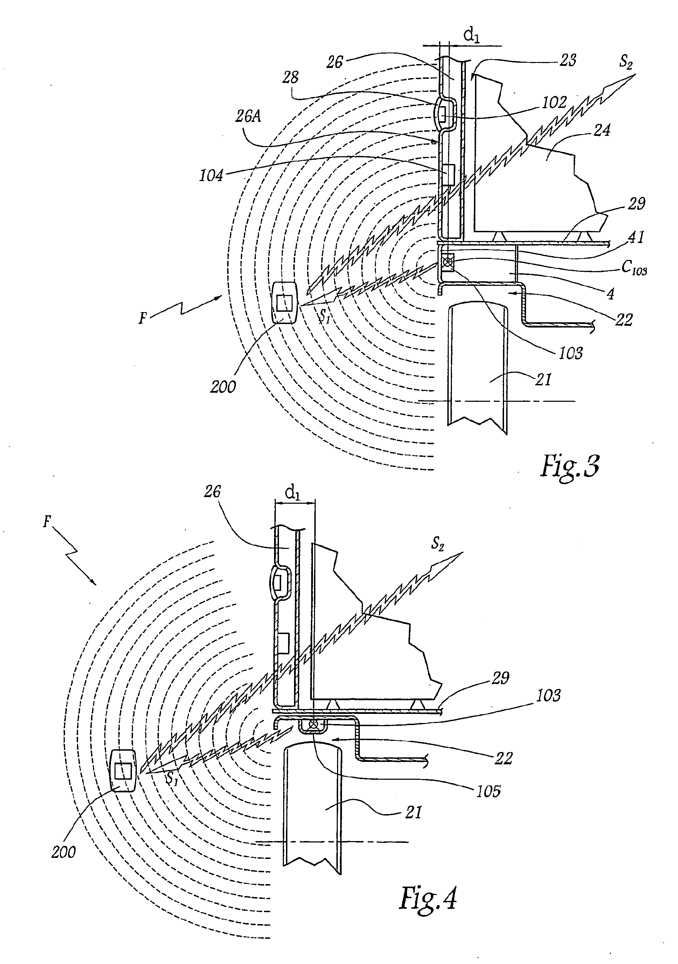

The truck 1 represented on figures 1 and 2 comprises a tractor 2 and a trailer 3 hooked to this tractor. Tractor 2 has a set of front wheels 21 and a set of non represented rear wheels which lie on the ground surface S supporting truck 1. Wheels 21 are located in two wheel arches, one of this arches being shown on figures 1 and 3 with reference 22. Tractor 2 also includes a cabin 23 which is located above the set of front wheels 21 and which includes a driver's seat 24 and a steering wheel 25. A driver's door 26 gives access to the inner volume of cabin 23.

A keyless access system 100 is mounted on tractor 2 and comprises a control unit 101 integrated to the dashboard 27 of cabin 23 and connected to an actuator switch 102 located on the internal side of a fridge type handle 28 of door 26. Handle 28 is qualified as a "fridge type handle" because it is similar to the handle of a fridge and slightly protrudes from the external panel of door 26. The invention can also be used with other handle types.

Unit 101 is also connected to a low frequency antenna 103 located on a side of tractor 2, below the floor 29 of cabin 23.

The fact that antenna 103 is on a side of tractor 2 means that the horizontal distance d₁ between the geometrical center C₁₀₃ of antenna 103 and the outer surface 26A of door 26 in the vicinity of handle 28 is less than 500 mm, preferably less than 250 mm.

Unit 101 is also connected to an actuator 104 located in door 26 and adapted to lock or unlock door 26 with respect to the frame of cabin 23, depending on instructions received from unit 101.

Connections between elements 101, 102, 103 and 104 are made via electric wires.

According to a non represented aspect of the invention, a switch, an antenna and an actuator respectively similar to items 102 to 104 might be provided on the passenger's side of cabin 23, these elements being also connected to unit 101.

One considers a user U approaching tractor 2 by its left side and wishing to enter cabin 23. The user graps handle 28, which is detected via switch 102. The corresponding information is forwarded to unit 101 which activates antenna 103 in order to send a low frequency challenge signal S₁, with a frequency of 125 kHz, towards a customer identification device or CID 200.

The challenge signal sent by antenna 103 propagates itself within a magnetic field F centred on this antenna and extending towards the outside of tractor 2, this magnetic field being, in practice, limited towards the inside of cabin 23 by floor 29, which is metallic, and by the metallic parts of door 26 and of the frame of cabin 23.

Thanks to its position, antenna 103 is installed independently of handle 28 which can be of any known type.

Thanks to the position of antenna 103, under the floor 29, challenge signal S₁ can reach CID 200 in the vast majority of likely positions of CID 200 when user U reaches handle 28. In others words, the position of antenna 103 guarantees that signal S₁ reaches CID 200 even when CID 200 is in a pocket of user U or in a bag lying on surface S.

Thanks to the position of antenna 103, magnetic field F can be restricted to a part of a sphere centred on antenna 103 and having a radius of about 1,5 m.. This guarantees that magnetic field F does not extend too far away from door 26. In particular, this guarantees that door 26 cannot be open when a driver stands in front of tractor 2 and has his CID with him or when he stands close to trailer 3 or to the hooking means of the trailer on tractor 2.

When CID 200 receives signal S₁ from antenna 103, it sends a high frequency response signal S₂ to unit 101, which can verify that this signal corresponds to a CID which allows access to cabin 23.

If such is the case, unit 101 activates actuator 104 to unlock door 26. If such is not the case, actuator 104 is not activated.

In the embodiment of figures 1 to 3, antenna 103 is installed within a non metallic locker 4 formed under floor 29 and above the wheel arch 22 of the left front wheel 21. This locker, which is usually used to store tools or accessories, efficiently protects antenna 103 from humidity and projections. As shown on figure 3, antenna 103 can be mounted on the inner side of a plastic cover panel 41 of locker 4. Alternatively, antenna 103 can be installed in others places within locker 4. In this case, distance d₁ is much smaller than 250 mm. It can be as small as 20 mm.

In the second embodiment of the invention represented on figure 4, the same elements as in the first embodiment bear the same references. In this embodiment, also antenna 103 is located within the wheel arch 22 of the left front wheel 21 of tractor 2, that is also under the cabin floor 29. This configuration corresponds to the case where a cabin 23 of the tractor is in a configuration somewhat lower than the configuration of figures 1 to 3, no locker being provided between wheel arch 22 and floor 29. In other words, floor 29 lies directly above floor arch 22. In this configuration, antenna 103 is protected by a water and air tight envelope 105 fixed to the upper surface of wheel arch 22, in a region where wheel 29 will not interfere, even upon actuation of the suspension system of tractor 2.

In this case, distance d₁ equals about 180 mm. Because of the metallic parts of door 26 and floor 29, field F might be slightly distorted in its upper zone, as shown on figure 4, but this is not a problem since CID 200 generally lies in the lower zone of field F. Signals S₁ and S₂ propagate as explained with respect to figures 1 to 3.

In practice, in both embodiments, antenna 103 is located between 1300 and 1600 mm above ground surface S.

According to another aspect of the invention which is visible on figure 1 but applies to both embodiments, antenna 103 is located, with respect to a longitudinal axis X₁-X'₁ of truck 1, substantially at the same level as handle 28. One considers a central vertical axis Z₂₈ of handle 28. Antenna 103 is located under floor 29 within a vertical band B which is greyed on figure 1 and extends between 300 mm in front of axis Z₂₈ and 300 mm behind axis 28. The fact that antenna 103 lies within this band. B guarantees that the antenna is roughly in front of a user holding handle 28 to actuate switch 102.

### LIST OF REFERENCES

- 1: Truck
- 2: Tractor
21 front wheel
22 wheel arch
23 cabin
24 d river's seat
25 steering wheel
26 door
26A outer surface of 26
27 dashboard
28 handle
29 floor
- 3: Trailer
- 4: Locker
41 cover panel
- 100: Keyless access system
101 control unit
102 actuator switch
103 antenna
104 actuator
105 enveloppe
- 200: Customer identification device or CID
- B: vertical band
- C₁₀₃: geometrical center of 103
- F: magnetic field
- S: ground surface
- S₁: challenge signal
- S₂: response signal
- U: user
- X₁-X'₁: longitudinal axis of truck 1
- Z₂₈: central axis of handle 28

## Claims

1. A truck (1) provided with a cabin (23), **characterized in that** it includes a passive keyless access system (100) comprising an antenna (103) located on a side of said truck, below the floor (29) of said cabin, said antenna being adapted to send a challenge signal (S₁) to a customer identification device (200).

2. Truck according to claim 1, **characterized in that** said antenna (103) is located between the cabin floor (29) and a front wheel (21) of said truck (1).

3. Truck according to claim 2, **characterized in that** said antenna (103) is installed within a locker (4) located between said floor (29) and said wheel (21).

4. Truck according to claim 2, **characterized in that** said antenna (103) is installed within a wheel arch (22), above said wheel (21).

5. Truck according to one of the previous claims, **characterized in that** said antenna (103) is located, with respect to a longitudinal direction (X₁-X'₁) of said truck (1), substantially at the same level as a handle (28) of said door (26).

6. Truck according to claim 5, **characterized in that** said antenna (103) is located in a zone (B) which extends between 300 mm towards the front side and 300 mm towards the back side of the truck (1), with respect to a central vertical axis (Z₂₈) of said handle (28).

7. Truck according to one of the previous claims, **characterized in that** said antenna is located between 1300 and 1600 mm above the ground surface (S) supporting said set of wheels (21).

8. Truck according to one of the previous claims, **characterized in that** said keyless access system (100) comprises a control unit (101) installed within or on said cabin (23) and adapted to actuate said antenna (103) in order to send said challenge signal (S₁), said unit being adapted to receive the response from a customer identification device (200) and to verify, on the basis of this response signal, if said customer identification device is valid for access to said cabin, said unit being associated with means (104) adapted to mechanically unlock a door (26) of said cabin (23) upon instructions received from said unit.

9. Truck according to one of the previous claims, **characterized in that** said antenna (103) is a low frequency radio antenna.

## Patentansprüche

1. Lastwagen (1), der mit einer Kabine (23) versehen ist, **dadurch gekennzeichnet, dass** er ein passives schlüsselloses Zugangssystem (100) aufweist, das eine an einer Seite des Lastwagens unter dem Kabinenboden (29) angeordnete Antenne (103) umfasst, wobei die Antenne dazu ausgelegt ist, ein Abfragesignal (S₁) an eine Kundenidentifikationsvorrichtung (200) zu senden.

2. Lastwagen nach Anspruch 1, **dadurch gekennzeichnet, dass** die Antenne (103) zwischen dem Kabinenboden (29) und einem Vorderrad (21) des Lastwagens (1) angeordnet ist.

3. Lastwagen nach Anspruch 2, **dadurch gekennzeichnet, dass** die Antenne (103) in einem Schließfach (4) angebracht ist, das zwischen dem Boden (29) und dem Rad (21) angeordnet ist.

4. Lastwagen nach Anspruch 2, **dadurch gekennzeichnet, dass** die Antenne (103) in einem Radbogen (22) über dem Rad (21) angebracht ist.

5. Lastwagen nach einem der vorhergehenden Ansprüche, **dadurch gekennzeichnet, dass** die Antenne (103) bezüglich einer Längsrichtung (X₁-X'₁) des Lastwagens (1) im Wesentlichen auf derselben Höhe angeordnet ist, wie ein Handgriff (28) der Tür (26).

6. Lastwagen nach Anspruch 5, **dadurch gekennzeichnet, dass** die Antenne (103) in einer Zone (B) angeordnet ist, die sich zwischen 300 mm in Richtung der Vorderseite und 300 mm in Richtung der Rückseite des Lastwagens (1) bezüglich einer zentralen vertikalen Achse (Z₂₈) des Handgriffs (28) erstreckt.

7. Lastwagen nach einem der vorhergehenden Ansprüche, **dadurch gekennzeichnet, dass** die Antenne zwischen 1300 und 1600 mm oberhalb der Grundfläche (S) angeordnet ist, die den Satz von Rädern (21) trägt.

8. Lastwagen nach einem der vorhergehenden Ansprüche, **dadurch gekennzeichnet, dass** das schlüssellose Zugangssystem (100) eine Steuereinheit (101) umfasst, die innerhalb oder an der Kabine (23) angebracht ist und so ausgelegt ist, dass sie die Antenne (103) in Gang setzt, um das Abrufsignal (S₁) abzusenden, wobei die Einheit so ausgelegt ist, dass sie die Antwort von einer Kundenidentifikationsvorrichtung (200) empfängt und auf der Basis dieses Antwortsignals verifiziert, ob die Kundenidentifikationsvorrichtung für den Zugang zu der Kabine gültig ist, wobei die Einheit einer Einrichtung (104) zugeordnet ist, die so ausgelegt ist, dass sie eine Tür (26) der Kabine (23) nach von der Einheit empfangenen Instruktionen mechanisch entsperrt.

9. Lastwagen nach einem der vorhergehenden Ansprüche, **dadurch gekennzeichnet, dass** die Antenne (103) eine Niedrigfrequenz-Radioantenne ist.

## Revendications

1. Un camion (1) équipé d'une cabine (23), **caractérisé en ce qu'**il inclut un système d'accès passif sans clé (100) comprenant une antenne (103) agencée sur un côté du dit camion, en dessous du plancher (29) de ladite cabine, ladite antenne étant adaptée pour envoyer un signal d'interrogation (S₁) à un dispositif d'indentification client (200).

2. Camion selon la revendication 1, **caractérisé en ce que** ladite antenne (103) est agencée entre le plancher (29) de la cabine et une roue avant (21) du dit camion (1).

3. Camion selon la revendication 2, **caractérisé en ce que** ladite antenne (103) est installée dans un compartiment (4) situé entre ledit plancher (29) et ladite roue (21).

4. Camion selon la revendication 2, **caractérisé en ce que** ladite antenne (103) est installée dans un passage de roue (22), au-dessus de ladite roue (21).

5. Camion selon l'une quelconque des revendications précédentes, **caractérisé en ce que** ladite antenne (103) est agencée, par rapport à une direction longitudinale (X₁-X'₁) du dit camion (1), sensiblement au même niveau qu'une poignée (28) de ladite porte (26).

6. Camion selon la revendication 5, **caractérisé en ce que** ladite antenne (103) est agencée dans une zone (B) qui s'étend entre 300 mm vers l'avant et 300 mm vers l'arrière du camion, par rapport à un axe central vertical (Z₂₈) de ladite poignée (28).

7. Camion selon l'une des revendications précédentes, **caractérisé en ce que** ladite antenne est agencée entre 1300 et 1600 mm au dessus de la surface du sol (S) supportant les roues (21).

8. Camion selon l'une des revendications précédentes, **caractérisé en ce que** ledit système d'accès passif sans clé (100) comprend une unité de contrôle (101) installée à l'intérieur ou sur la cabine (23) et adaptée pour commander ladite antenne (103) afin d'envoyer ledit signal d'interrogation (S₁), ladite unité étant adaptée pour recevoir la réponse d'un dispositif d'identification client (200) et pour vérifier, sur la base de ce signal de réponse, si ledit dispositif d'identification client est valable pour l'accès à la cabine, ladite unité étant associée à des moyens (104) adaptés pour déverrouiller mécaniquement une porte (26) de ladite cabine (23) sur instructions reçues de ladite unité.

9. Camion selon l'une quelconque des revendications précédentes, **caractérisé en ce que** ladite antenne (103) est une antenne radio basses fréquences.
